# EUROPEAN PATENT APPLICATION

(11) **EP 4 510 238 A1**
(43) Date of publication of application: **19.02.2025**
(21) Application number: 22955251.8
(22) Date of filing: 16.08.2022
(51) Int. Cl.: H01M 4/62, H01M 4/36

(54) **MODIFIED NEGATIVE ELECTRODE MATERIAL AND PREPARATION METHOD THEREFOR, NEGATIVE ELECTRODE PLATE, SECONDARY BATTERY AND ELECTRIC DEVICE**

(71) Applicant: Contemporary Amperex Technology Co., Limited, Ningde, Fujian 352100 (CN)
(72) Inventor: XU, Ningbo, Ningde, Fujian 352100 (CN); CHEN, Peipei, Ningde, Fujian 352100 (CN)
(74) Representative: Kraus & Lederer PartGmbB
(86) International application number: PCT/CN2022/112711
(87) International publication number: WO 2024/036469

(57) **Abstract**

This application provides a modified negative electrode material, a preparation method therefor, a negative electrode plate, a secondary battery, and an electrical device. The modified negative electrode material includes a negative electrode active substrate and a silicate ester group connected to the negative electrode active substrate through an oxygen atom, and a structure of the silicate ester group is shown in formula (1), wherein each R₁ is independently selected from substituted or unsubstituted alkyl having 1 to 10 carbon atoms, or substituted or unsubstituted alkenyl having 1 to 10 carbon atoms; and * represents a connecting site.

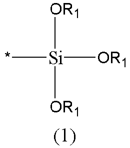

## Description

### TECHNICAL FIELD

This application relates to the field of batteries, and in particular, to a modified negative electrode material, a preparation method therefor, a negative electrode plate, a secondary battery, and an electrical device.

### BACKGROUND

A secondary battery is increasingly widely used because of its clean and renewable characteristics and has the advantages of high energy density, low self discharge, superior cycle performance, and the like.

The secondary battery primarily relies on movement of active ions between a positive electrode and a negative electrode to generate electric energy. During charging, the active ions are deintercalated from the positive electrode and intercalated into the negative electrode through an electrolytic solution, and during discharging, the opposite is true. However, in charging and discharging processes of the secondary battery, intercalation and deintercalation of the active ions, such as lithium ions, cause expansion and shrinkage of a negative electrode plate, which damages the structure of a negative electrode material, and in cyclic charging and discharging processes, co-intercalation of an electrolytic solution solvent, reduction of an organic solvent, and production of gas at a high current all cause a negative electrode active material to peel off, which leads to an increase in interface instability, resulting in the loss of a negative electrode active substance and the damage to a solid electrolyte interface (SEI) film, which reduces the cycle life of the secondary battery.

With an increase in demand, it is more and more difficult for the cycle performance of conventional secondary batteries to meet people's demands and the cycle performance needs to be further improved.

### SUMMARY

In view of the foregoing problems, this application provides a modified negative electrode material, a preparation method therefor, a negative electrode plate, a secondary battery, and an electrical device, to improve cycle performance of a secondary battery.

In order to achieve the foregoing objective, a first aspect of this application provides a modified negative electrode material. The modified negative electrode material includes a negative electrode active substrate and a silicate ester group connected to the negative electrode active substrate through an oxygen atom, and the structure of the silicate ester group is shown in formula (1): 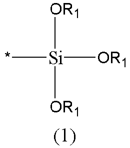
where each R₁ is independently selected from substituted or unsubstituted alkyl having 1 to 10 carbon atoms, or substituted or unsubstituted alkenyl having 1 to 10 carbon atoms; and
* represents a connecting site.

In the foregoing modified negative electrode material, the silicate ester group is connected on a surface of the negative electrode active substrate through the oxygen atom, such silicate ester structure is similar to an original silicic acid structure, which may be decomposed into silicic acid in charging and discharging processes, and then generate silicate with cations in an electrolytic solution. On the one hand, the silicate is basic, which may remove an acidic substance generated in the electrolytic solution and inhibit the damage to an interface structure by HF or the like, and on the other hand, the silicate has a certain viscosity and may be loaded on a surface of a negative electrode plate to play a stabilizing role, which may improve interface stability of the negative electrode plate, thereby reducing resistance of a secondary battery and improving the cycle performance of the secondary battery.

In an optional implementation of this application, each R₁ is independently selected from substituted or unsubstituted alkyl having 1 to 6 carbon atoms.

Optionally, each R₁ is independently selected from substituted or unsubstituted alkyl having 1 to 4 carbon atoms.

By adjusting the number of the carbon atoms in R₁, steric hindrance of R₁ is further reduced, which may further improve the cycle performance of the secondary battery.

In an optional implementation of this application, each R₁ is independently selected from unsubstituted chain alkyl having 1 to 4 carbon atoms, or halogen-substituted chain alkyl having 1 to 4 carbon atoms.

In an optional implementation of this application, each R₁ is independently any one selected from methyl, ethyl, n-propyl, isopropyl, n-butyl, isobutyl, and a halide thereof.

In an optional implementation of this application, the silicate ester group satisfies at least one of following conditions (a) to (b):
(a) a percentage of the silicate ester group in the modified negative electrode material ranges from 0.005 wt% to 5 wt%; and
(b) the silicate ester group is located on a surface of the negative electrode active substrate to form a coating layer.

In an optional implementation of this application, the coating layer has a thickness ranging from 1 nm to 20 nm.

In an optional implementation of this application, the negative electrode active substrate includes at least one of a carbon substrate and a silicon substrate.

A second aspect of this application provides a preparation method for a modified negative electrode material, including the following steps:
performing a transesterification reaction between a negative electrode active substrate and a compound in formula (2) to prepare the modified negative electrode material; 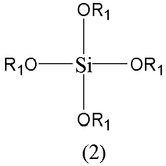
where hydroxyl is contained on a surface of the negative electrode active substrate; and R₁ in formula (2) is the same as R₁ in the first aspect.

The foregoing modified negative electrode material is obtained by performing the transesterification reaction between the compound in formula (2) and the hydroxyl on the negative electrode active substrate.

In an optional implementation of this application, the transesterification reaction is performed at a temperature ranging from 50°C to 80°C for 6 h to 24 h.

In an optional implementation of this application, a mass ratio of the compound in formula (2) to the negative electrode active substrate is (0.05 to 1): 10.

In an optional implementation of this application, the transesterification reaction is performed under an action of a transesterification catalyst, and the transesterification catalyst satisfies at least one of following conditions (c) to (d):
(c) the transesterification catalyst includes at least one of a basic catalyst, an acid catalyst and an organic silane;
optionally, the transesterification catalyst includes at least one of inorganic base, organic base, inorganic acid, organic acid and organic chlorosilane; and
optionally, the transesterification catalyst includes at least one of sodium hydroxide, potassium hydroxide, hydrochloric acid, sulfuric acid, ammonia water and dichlorodimethylsilane; and
(d) a mass ratio of the transesterification catalyst to the negative electrode active substrate is (0.01 to 0.5): 10.

In an optional implementation of this application, the transesterification reaction is performed in an organic solvent, and the organic solvent satisfies at least one of following conditions (e) to (f):
(e) the organic solvent includes at least one of a carbonate solvent, a carboxylate solvent, an alcohol solvent and an ether solvent; and
optionally, the organic solvent includes at least one of dimethyl carbonate, ethyl methyl carbonate, ethanol and glycol dimethyl ether; and
(f) a mass ratio of the organic solvent to the negative electrode active substrate is (10 to 300): 10.

A third aspect of this application provides a negative electrode plate. The negative electrode plate includes a current collector and a negative electrode active layer disposed on a surface of the current collector, and ingredients of the negative electrode active layer include the modified negative electrode material according to the first aspect, or the modified negative electrode material prepared through the preparation method for the modified negative electrode material according to the second aspect.

In an optional implementation of this application, a mass percentage of the modified negative electrode material in the negative electrode active layer ranges from 70% to 99.5%.

A fourth aspect of this application provides a secondary battery. The secondary battery includes the negative electrode plate according to the third aspect of this application.

In an optional implementation of this application, a surface of the negative electrode active layer in the negative electrode plate is loaded with silicate, and a silicic acid group in the silicate is derived from decomposition of the silicate ester group.

A fifth aspect of this application provides an electrical device. The electrical device includes the secondary battery according to the fourth aspect of this application.

The above description is only an overview of the technical solutions of this application, in order to be able to more clearly understand the technical means of this application, the technical solutions may be implemented in accordance with the contents of the specification, and in order to make the above and other objectives, features and advantages of this application more apparent and understandable, the specific implementations of this application are thereby listed.

### BRIEF DESCRIPTION OF DRAWINGS

Various other advantages and benefits will become clear to a person of ordinary skill in the art by reading a detailed description of the preferred implementations below. The drawings are merely for the purpose of showing the preferred implementations and are not to be considered as a limitation of this application. Moreover, throughout the drawings, the same reference numerals indicate the same components. In the drawings:
FIG. 1 is a schematic diagram of an implementation of a secondary battery;
FIG. 2 is an exploded view of FIG. 1;
FIG. 3 is a schematic diagram of an implementation of a battery pack;
FIG. 4 is an exploded view of FIG. 3; and
FIG. 5 is a schematic diagram of an implementation of an electrical device using a secondary battery as a power supply.

Reference numerals in the drawings:
1. Battery pack; 2. Upper box body; 3. Lower box body; 4. Secondary battery; 41. Shell; 42. Electrode assembly; 43. Cover plate; and 5. Electrical device.

### DETAILED DESCRIPTION OF EMBODIMENTS

The following describes in detail the embodiments of the technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by persons skilled in the art to which this application belongs. The terms used herein are intended to merely describe the specific embodiments rather than to limit this application. The terms "comprise", "include", and any other variations thereof in the specification, claims and brief description of drawings of this application are intended to cover non-exclusive inclusions.

In the description of the embodiments of this application, the technical terms "first", "second", and the like are merely used to distinguish between different objects, and shall not be construed as any indication or implication of relative importance or any implicit indication of the quantity, particular sequence or primary-secondary relationship of the technical features indicated. In the description of the embodiments of this application, "a plurality of" means two or more unless otherwise expressly and specifically defined.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the descriptions of the embodiments of this application, the term "and/or" describes only an association relationship for describing associated objects and represents that three relationships may exist. For example, A and/or B may represent: the following three cases: only A alone, both A and B, and only B alone. In addition, the character "/" in this specification generally indicates an "or" relationship between contextually associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings, merely to facilitate the description of the embodiments of this application and simplify the description, and do not indicate or imply that the device or element referred to must have a particular orientation, be constructed and operated in a particular orientation, and thus should not be construed as limiting the embodiments of this application.

In the description of the embodiments of this application, unless otherwise expressly specified and limited, the technical terms "mounted", "connected", "connect", "fixed" and the like are to be understood in a broad sense, for example, it may be a fixed connection, or a detachable connection, or an integral connection; it may also be a mechanical connection or an electrical connection; and it may be a direct connection or indirect connection through an intermediate medium, and may be the interior communication between two elements or the interaction relationship between two elements. For a person of ordinary skill in the art, the specific meaning of the above-mentioned terms in the embodiments of this application may be understood according to specific circumstances.

To sum up, as described in the background, instability of a negative electrode plate interface limits enhancement of cycle performance of a secondary battery. In a conventional technology, a functional agent is usually added to an electrolytic solution to form a coating film in situ at a negative electrode interface in charging and discharging processes to improve interface stability, or a surface of a negative electrode material is directly coated to improve the interface stability.

However, technicians of this application have researched and found in the actual production process that: in the method in which the functional agent is added to the electrolytic solution to form the coating film in situ, most of inorganic ingredients in a formed interface inner layer are oxides or salts of a crystal structure, such inorganic layer is very pone to fracture in a process of volume change of lithium de-intercalation/intercalation, which leads to direct contact between the active ingredients and the electrolytic solution, causing over-consumption of the electrolytic solution and active lithium, which will deteriorate the performance of a battery cell instead; and when the surface of the negative electrode material is directly coated, the formed interface and the negative electrode are unstably combined, and the stability, especially in a high SOC state, is still very problematic, so people's demand for higher and higher cycle performance of the secondary battery cannot be met.

Based on this, the technicians of this application, after a large number of experimental investigations, creatively propose to chemically modify the negative electrode material, by connecting the negative electrode material to a functional group through a chemical bond and selecting a specific functional group, the negative electrode material can be decomposed into a viscous substance in the charging and discharging processes to be loaded on the negative electrode interface, so as to improve the interface stability, thereby improving the cycle performance of the secondary battery.

An implementation of this application provides a modified negative electrode material. The modified negative electrode material includes a negative electrode active substrate and a silicate ester group connected to the negative electrode active substrate through an oxygen atom, and a structure of the silicate ester group is shown in formula (1): 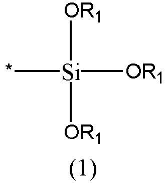
where each R₁ is independently selected from substituted or unsubstituted alkyl having 1 to 10 carbon atoms, or substituted or unsubstituted alkenyl having 1 to 10 carbon atoms; and
* represents a connecting site.

In the foregoing modified negative electrode material, the silicate ester group is connected on a surface of the negative electrode active substrate through the oxygen atom, such silicate ester structure is similar to an original silicic acid structure, which may be decomposed in charging and discharging processes and then generate silicate. On the one hand, the silicate is basic, which may remove an acidic substance generated in an electrolytic solution and inhibit the damage to an interface structure by HF or the like, and on the other hand, the silicate has a certain viscosity and may be loaded on a surface of a negative electrode plate to play a stabilizing role, which may improve interface stability of the negative electrode plate, thereby reducing resistance of a secondary battery and improving the cycle performance of the secondary battery.

The structure of the foregoing modified negative electrode material is shown as follows:

(R₁O)₃-Si-O-M

where M represents the negative electrode active substrate.

In the foregoing " having 1 to 10 carbon atoms", a value of the number of the carbon atoms includes a minimum value and a maximum value within the range, as well as each integer value between the minimum value and the maximum value, and specific examples include, but are not limited to, point values in the embodiments and: 1, 2, 3, 4, 5, 6, 7, 8, 9 and 10.

In an optional implementation of this application, each R₁ is independently selected from unsubstituted alkyl having 1 to 10 carbon atoms, or halogen-substituted alkyl having 1 to 10 carbon atoms.

There is no particular limitation on the number of halogen atoms in the foregoing halogen-substituted alkyl having 1 to 10 carbon atoms.

Optionally, at least one halogen atom is contained in the halogen-substituted alkyl having 1 to 10 carbon atoms.

Optionally, at least two halogen atoms are contained in the halogen-substituted alkyl having 1 to 10 carbon atoms.

Optionally, at least three halogen atoms are contained in the halogen-substituted alkyl having 1 to 10 carbon atoms.

Optionally, halogen includes at least one of fluorine, chlorine, bromine, or iodine.

In an optional implementation of this application, each R₁ is independently selected from unsubstituted chain alkyl having 1 to 10 carbon atoms, or halogen-substituted chain alkyl having 1 to 10 carbon atoms.

In an optional implementation of this application, each R₁ is independently selected from substituted or unsubstituted alkyl having 1 to 6 carbon atoms.

In an optional implementation of this application, each R₁ is independently selected from substituted or unsubstituted alkyl having 1 to 4 carbon atoms.

By adjusting the number of the carbon atoms in R₁, steric hindrance of R₁ is further reduced, which may further improve the cycle performance of the secondary battery.

In an optional implementation of this application, each R₁ is independently selected from unsubstituted chain alkyl having 1 to 4 carbon atoms, or halogen-substituted chain alkyl having 1 to 4 carbon atoms.

In an optional implementation of this application, each R₁ is independently selected from unsubstituted linear alkyl having 1 to 4 carbon atoms, or halogen-substituted linear alkyl having 1 to 4 carbon atoms.

In an optional implementation of this application, each R₁ is independently any one selected from methyl, ethyl, n-propyl, isopropyl, n-butyl, isobutyl, and a halide thereof.

Optionally, each R₁ is independently any one selected from methyl, ethyl, n-propyl, isopropyl, n-butyl, isobutyl, chloromethyl, dichloromethyl, chloroethyl and dichloroethyl.

In an optional implementation of this application, a percentage of the foregoing silicate ester group in the modified negative electrode material ranges from 0.005 wt% to 5 wt%.

In an optional implementation of this application, the foregoing silicate ester group is loaded on a surface of the negative electrode active substrate to form a coating layer.

After being loaded on the surface of the negative electrode active substrate, the foregoing silicate ester group is gathered to form the coating layer to coat the negative electrode active substrate.

In an optional implementation of this application, the foregoing coating layer has a thickness ranging from 1 nm to 20 nm.

In an optional implementation of this application, the foregoing negative electrode active substrate includes at least one of a carbon substrate and a silicon substrate.

Optionally, the foregoing negative electrode active substrate may be selected from, but is not limited to: one or more of graphite, soft carbon, hard carbon, mesocarbon microbeads, carbon fibers, carbon nanotubes, monatomic silicon, silicon oxide, a silicon-carbon compound, or a compound obtained by adding transition metal or non-transition metal to such materials.

Optionally, the foregoing negative electrode active substrate is at least one selected from graphite, monatomic silicon, silicon oxide and a silicon-carbon compound.

An implementation of the application provides a preparation method for a modified negative electrode material, including the following step S10.

Step S10. performing a transesterification reaction between a negative electrode active substrate and a compound in formula (2) to prepare the modified negative electrode material; 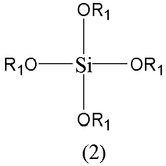 where hydroxyl is contained on a surface of the negative electrode active substrate; and R₁ in formula (2) is the same as R₁ in the first aspect.

The foregoing modified negative electrode material is obtained by performing the transesterification reaction between the compound in formula (2) and the hydroxyl on the negative electrode active substrate.

A specific reaction route is as follows:

(R₁O)₃-Si-OR₁ + M-OH **→** (R₁O)₃-Si-O-M +R₁OH

where M represents the negative electrode active substrate, and the selection of the negative electrode active substrate is as described above and will not be described in detail herein.

The foregoing negative electrode active substrate may be a conventional unactivated negative electrode active substrate in the art, and may also be an activated negative electrode active substrate having hydroxyl formed on a surface thereof. It can be understood that: A commonly used negative electrode active substrate in the art includes a silicon-based negative electrode active material and a carbon-based negative electrode active material, the surface of which itself has abundant hydroxyl distributed thereon, the compound in formula (2) undergoes the transesterification reaction with the hydroxyl on the conventional negative electrode active substrate to obtain the foregoing modified negative electrode material, and the conventional negative electrode active substrate may also be activated to further form more abundant hydroxyl on the surface and then reacts with the compound in formula (2).

In an optional implementation of this application, the foregoing transesterification reaction is performed at a temperature ranging from 50°C to 80°C for 6 h to 24 h.

In an optional implementation of this application, a mass ratio of the compound in formula (2) to the foregoing negative electrode active substrate is (0.05 to 1): 10.

By regulating the reaction conditions of the transesterification reaction and the raw material ratio thereof, all the hydroxyl on the surface of the negative electrode active substrate reacts with the compound in formula (2) as much as possible.

In an optional implementation of this application, the foregoing transesterification reaction is performed under an action of a transesterification catalyst.

Optionally, the foregoing transesterification catalyst includes at least one of a basic catalyst, an acid catalyst and an organic silane.

Optionally, the foregoing transesterification catalyst includes at least one of inorganic base, organic base, inorganic acid, organic acid and organic chlorosilane.

Optionally, the transesterification catalyst includes at least one of sodium hydroxide, potassium hydroxide, hydrochloric acid, sulfuric acid, ammonia water and dichlorodimethylsilane.

In an optional implementation of this application, a mass ratio of the foregoing transesterification catalyst to the foregoing negative electrode active substrate is (0.01 to 0.5): 10.

In an optional implementation of this application, the foregoing transesterification reaction is performed in an organic solvent.

Optionally, the foregoing organic solvent includes at least one of a carbonate solvent, a carboxylate solvent, an alcohol solvent and an ether solvent.

Optionally, the foregoing organic solvent includes at least one of dimethyl carbonate, ethyl methyl carbonate, ethanol and glycol dimethyl ether.

In an optional implementation of this application, a mass ratio of the foregoing organic solvent to the foregoing negative electrode active substrate in an optional implementation of this application is (10 to 300): 10.

The selection of R₁ in formula (2) is as described above and will not be described in detail herein.

Optionally, the compound in formula (2) is at least one selected from tetramethyl orthosilicate, tetrabutyl orthosilicate, tetraethyl orthosilicate, tetrapropyl orthosilicate and tetrahexyl orthosilicate.

### [Negative electrode plate]

An implementation of this application further provides a negative electrode plate. The negative electrode plate includes a current collector and a negative electrode active layer disposed on a surface of the current collector, and ingredients of the negative electrode active layer include the foregoing modified negative electrode material, or the modified negative electrode material prepared through the preparation method for the foregoing modified negative electrode material.

The electrode plate has low impedance, which can maintain a stable interface in charging and discharging processes, thereby improving cycle performance of a secondary battery.

In an optional implementation of this application, a mass percentage of the foregoing modified negative electrode material in the negative electrode active layer ranges from 70% to 99.5%.

In an optional implementation of this application, the ingredients of the foregoing negative electrode active layer further include a negative electrode conductive agent and a negative electrode binder.

In an optional implementation of this application, the foregoing negative electrode conductive agent may be a conductive material commonly used in the art, which includes, but is not limited to: at least one of graphite, carbon nanotubes, nanofibers, carbon black and graphene. Specifically, the foregoing negative electrode conductive agent may be at least one selected from SP, KS-6, acetylene black, Ketjen black ECP with a branched chain structure, SFG-6, vapor grown carbon fiber (VGCF), carbon nanotubes (CNTs), graphene, and a composite conductive agent thereof.

Based on a total mass of the negative electrode active layer, a mass percentage of the negative electrode conductive agent in the negative electrode active layer ranges from 0 to 20 wt%.

The foregoing negative electrode binder may be a binder commonly used in the art, and may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA) and carboxymethyl chitosan (CMCS).

Based on a total mass of the negative electrode active layer, a mass percentage of the negative electrode binder in the negative electrode active layer ranges from 0 to 30 wt%.

In an optional implementation of this application, the negative electrode active layer further optionally includes other agents, such as a thickener, such as sodium carboxymethyl cellulose (CMC-Na). Based on a total mass of the negative electrode active layer, a mass percentage of the other agents in the negative electrode active layer ranges from 0 to 15 wt%.

In an optional implementation of this application, the current collector in the negative electrode plate may be a metal foil or a composite current collector. For example, the metal foil may be a copper foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on the polymer material substrate (such as polypropylene (PP), polyethylene terephthalate (PET), polybutylene terephthalate (PBT), polystyrene (PS), or polyethylene (PE)).

In an optional implementation of this application, the negative electrode plate may be prepared according to the following method: dispersing the foregoing ingredients for preparing the negative electrode plate, such as the modified negative electrode active materia, the conductive agent, the binder, and any other ingredients into a solvent (such as deionized water) to form a negative electrode slurry; and coating a negative current collector with the obtained negative electrode slurry, and performing procedures such as drying and cold calendering to obtain the negative electrode plate. The foregoing negative electrode slurry has a solid content ranging from 30 wt% to 70 wt%, and the viscosity is adjusted to 2000 mPa·s to 10000 mPa·s at a room temperature; and the negative current collector is coated with the obtained negative electrode slurry, and a drying procedure, and cold calendering, such as double rollers, are performed to obtain the negative electrode plate. The negative electrode powder coated unit surface density ranges from 75 mg/m² to 220 mg/m², and the compacted density of the negative electrode plate ranges from 1.2 g/cm³ to 2.0 g/cm³.

An implementation of this application provides a secondary battery, including the foregoing negative electrode plate.

The secondary battery has excellent cycle performance.

Optionally, the foregoing secondary battery may be a sodium-ion battery, a lithium-ion battery and a potassium-ion battery.

In an optional implementation of this application, the foregoing secondary battery further includes a positive electrode plate, an electrolytic solution and a separator.

The positive electrode plate, the electrolytic solution and the separator are illustrated below, but are not limited to the following scope.

### [Positive electrode plate]

The positive electrode plate includes a current collector and a positive electrode active layer disposed on a surface of the current collector, and ingredients of the positive electrode active layer include a positive electrode active material.

As an example, the current collector in the positive electrode plate is provided with two opposite surfaces in a thickness direction of the current collector, and the positive electrode active material layer is disposed on either or both of the two opposite surfaces of the positive current collector.

In an optional implementation of this application, the current collector in the positive electrode plate may be a metal foil or a composite current collector. For example, the metal foil may be an aluminum foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on the polymer material substrate (such as polypropylene (PP), polyethylene terephthalate (PET), polybutylene terephthalate (PBT), polystyrene (PS), or polyethylene (PE)).

The foregoing positive electrode active material may be a positive electrode active material commonly used in this application, such as a lithium-ion positive electrode active material or a sodium-ion positive electrode active material.

Further, as an example, the lithium-ion active material may include at least one of the following materials: olivine-structured lithium-containing phosphate, lithium transition metal oxide, and a modified compound thereof. However, this application is not limited to such materials, and other conventional materials usable as a positive active material of a battery may further be used. Of such positive active materials, one may be used alone, or at least two may be used in combination. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), lithium manganese phosphate (such as LiMnPO₄) and lithium manganese iron phosphate.

In an optional implementation of this application, a molecular formula of the lithium-ion active material is: LiFeₓMn₍₁₋ₓ₎PO₄, where x is any value ranging from 0 to 1.

It can be understood that when x is 0, LiFeₓMn₍₁₋ₓ₎PO₄ is LiMnPO₄ lithium manganese phosphate, and when x is 1, LiFePO₄ is LiFePO₄ lithium iron phosphate (LFP).

As an example, the sodium-ion active material may include at least one of the following materials: at least one of sodium transition metal oxide, a polyanionic compound and a Prussian blue compound. However, this application is not limited to such materials, and other conventional well-known materials usable as a positive active material of a sodium-ion battery may further be used.

As an alternative technical solution of this application, in the sodium transition metal oxide, transition metal at least includes at least one of Mn, Fe, Ni, Co, Cr, Cu, Ti, Zn, V, Zr and Ce. The sodium transition metal oxide is for example NaₓMO₂, where M at least includes one or more of Ti, V, Mn, Co, Ni, Fe, Cr and Cu, and 0 < x ≤ 1.

As an alternative technical solution of this application, the polyanionic compound may be a type of compounds having a sodium ion, a transition metal ion and a tetrahedral (YO₄)ⁿ⁻ anion unit. The transition metal at least includes at least one of Mn, Fe, Ni, Co, Cr, Cu, Ti, Zn, V, Zr and Ce; Y at least includes at least one of P, S and Si; and n represents the valence of (YO₄)ⁿ⁻.

The polyanionic compound may further be a class of compounds having a sodium ion, a transition metal ion, a tetrahedral (YO₄)ⁿ⁻ anion unit, and a halogen anion. The transition metal at least includes at least one of Mn, Fe, Ni, Co, Cr, Cu, Ti, Zn, V, Zr and Ce; Y at least includes at least one of P, S and Si; n represents the valence of (YO₄)ⁿ⁻; and the halogen may be at least one of F, Cl and Br.

The polyanionic compound may further be a class of compounds having a sodium ion, a tetrahedral (YO₄)ⁿ⁻ anion unit, a polyhedral unit (ZO_{y})^{m+}, and an optional halogen anion. Y at least includes at least one of P, S and Si, and n represents the valence of (YO₄)ⁿ⁻; Z represents the transition metal, which at least includes at least one of Mn, Fe, Ni, Co, Cr, Cu, Ti, Zn, V, Zr and Ce, and m represents the valence of (ZO_{y})^{m+}; and the halogen may be at least one of F, Cl and Br.

The polyanionic compound is for example at least one of NaFePO₄, Na₃V₂(PO₄)₃ (vanadium sodium phosphate, briefly referred to as NVP), Na₄Fe₃(PO₄)₂(P₂O₇), NaM'PO₄F (M' is one or more of V, Fe, Mn and Ni) and Na₃(VO_{y})₂(PO₄)₂F_{3-2y} (0 ≤ y ≤ 1).

The Prussian blue compound may be a class of compounds having a sodium ion, a transition metal ion and a cyanide ion (CN). The transition metal at least includes at least one of Mn, Fe, Ni, Co, Cr, Cu, Ti, Zn, V, Zr and Ce. The Prussian blue compound is for example NaₐMe_{b}Me'_{c} (CN)₆, where Me and Me' each independently at least includes at least one of Ni, Cu, Fe, Mn, Co, and Zn, 0 < a ≤ 2, 0 < b <1, and 0 < c <1.

Based on a total mass of the positive electrode active layer, a mass percentage of the positive electrode active material in the positive electrode active layer ranges from 80 wt% to 100 wt%.

In an optional implementation of this application, the ingredients of the positive electrode active layer further include a positive electrode conductive agent and a positive electrode binder.

The foregoing positive electrode conductive agent may be a conductive agent commonly used in the art, which includes, but is not limited to: at least one of graphite, carbon nanotubes, nanofibers, carbon black and graphene. Specifically, the foregoing negative electrode conductive agent may be at least one selected from SP, KS-6, acetylene black, Ketjen black ECP with a branched chain structure, SFG-6, vapor grown carbon fiber (VGCF), carbon nanotubes (CNTs), graphene, and a composite conductive agent thereof.

Based on the total mass of the positive electrode active layer, a mass percentage of the positive electrode conductive agent in the positive electrode active layer ranges from 0 to 20 wt%.

In an optional implementation of this application, a binder of the foregoing positive electrode binder may be at least one of polyvinylidene fluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), hydrogenated butadiene-acrylonitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS) and fluorinated acrylate resin.

Based on the total mass of the positive electrode active layer, a mass percentage of the positive electrode binder in the positive electrode active layer ranges from 0 to 30 wt%.

In an optional implementation of this application, the positive electrode plate may be prepared according to the following method: dispersing the foregoing ingredients for preparing the positive electrode plate into a solvent (such as N-methylpyrrolidone) to form a positive electrode slurry; and coating a current collector with the positive electrode slurry, and performing procedures such as drying and cold calendering to obtain the positive electrode plate. The positive electrode slurry has a solid content ranging from 40 wt% to 80 wt%, the viscosity is adjusted to 5000 mPa·s to 25000 mPa·s at a room temperature, a surface of the positive current collector is coated with the positive electrode slurry, and the positive electrode slurry on the positive current collector is dried, and cold calendered by a cold calender to form the positive electrode plate. The positive electrode powder coated unit surface density ranges from 150 to 350 mg/m², and the compacted density of the positive electrode plate ranges from 3.0 to 3.6 g/cm³, optionally, 3.3 to 3.5 g/cm³. A computational formula of the compacted density is:
compacted density = coated surface density / (squeezed electrode plate thickness - current collector thickness).

### [Electrolytic solution]

The electrolytic solution includes an electrolyte salt and a solvent.

In some implementations, the electrolyte salt may be selected from an electrolyte salt commonly used in the art, and includes a lithium-ion electrolyte salt and a sodium-ion electrolyte salt.

As an example, the lithium-ion electrolyte salt is one or more selected from: lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro(bisoxalato)phosphate (LiDFOP), Li(FSO₂)₂N, LiCF₃SO₃ and lithium tetrafluoro(oxalato)phosphate (LiTFOP).

In an optional embodiment of this application, a surface of the negative electrode active layer in the foregoing negative electrode plate is loaded with silicate, and a silicic acid group in the silicate is derived from decomposition of a silicate ester group.

In the charging and discharging processes of the secondary battery, the silicate ester group connected on the surface of the negative electrode active substrate may be decomposed and then generate silicate. On the one hand, the silicate is basic, and part of the lithium silicate is combined with an acidic substance, which may remove the acidic substance generated in the electrolytic solution and inhibit the damage to an interface structure by HF or the like, and on the other hand, the silicate has a certain viscosity, and part of the silicate may be loaded on a surface of the negative electrode plate to play a stabilizing role, which may improve interface stability of the negative electrode plate, thereby reducing resistance of the secondary battery and improving the cycle performance of the secondary battery.

A cationic group in the foregoing silicate is derived from the ingredients of the electrolytic solution, and further, derived from from cations in the electrolyte salt. For example, when the electrolyte salt is the sodium-ion electrolyte salt, sodium silicate is formed, when the electrolyte salt is a potassium-ion electrolyte salt, potassium silicate is formed, and when the electrolyte salt is the lithium-ion electrolyte salt, lithium silicate is formed.

Optionally, the foregoing silicate may be the foregoing lithium silicate, and may also be the sodium silicate or the potassium silicate, and the lithium silicate, the sodium silicate or the potassium silicate each has properties similar to "water glass", and has a certain viscosity, such as sodium silicate, Li₄SiO₄, Li₂SiO₃, Li₂SiO₅, or the like.

In an optional implementation of this application, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS) and (ethylsulfonyl)ethane (ESE).

In an optional implementation of this application, the electrolyte salt typically has a concentration ranging from 0.5 mol/L to 15 mol/L.

In an optional implementation of this application, the foregoing electrolytic solution further optionally includes an additive. For example, the additive may include a negative film-forming additive and a positive film-forming additive. The additive may further include an additive capable of improving specified performance of the battery, for example, an additive for improving overcharge performance of the battery, or an additive for improving high- or low-temperature performance of the battery.

### [Separator]

The separator is disposed between the positive electrode plate and the negative electrode plate.

The type of the separator is not particularly limited in this application, and may be any well-known separator with a porous structure that has good chemical stability and mechanical stability.

In some implementations, the material of the separator may be at least one selected from glass fibers, a nonwoven fabric, polyethylene, polypropylene and polyvinylidene fluoride. The separator may be a single-layer film, and may also be a multilayer composite film, without being particularly limited. When the separator is the multilayer composite film, materials of layers may be the same or different, without being particularly limited.

The foregoing secondary battery further includes a housing for packaging the positive electrode plate, the negative electrode plate, the separator and the electrolytic solution.

In some implementations, the foregoing housing may be a hard shell, such as a hard plastic shell, an aluminum shell, and a steel shell. The foregoing housing may also be a soft package, such as a pouch-type soft package. The soft package may be made of plastic such as polypropylene, polybutylene terephthalate, or polybutylene succinate.

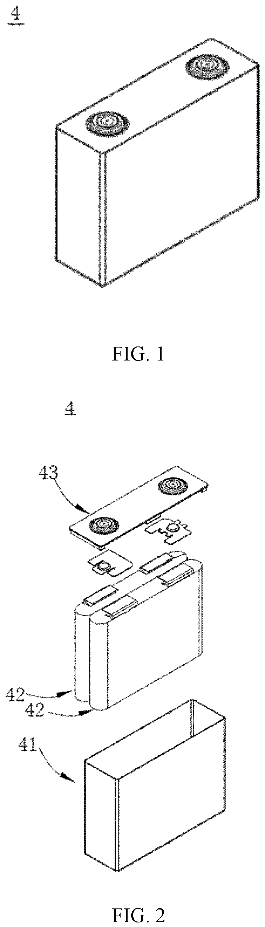

The shape of the secondary battery is not particularly limited in this application, and may be cylindrical, prismatic or any other shape. For example, FIG. 1 is a secondary battery 4 of a prismatic structure as an example.

In some embodiments, referring to FIG. 2, the housing may include a shell 41 and a cover plate 43. The shell 41 may include a bottom plate and side plates connected to the bottom plate, and an accommodating cavity is enclosed by the bottom plate and the side plates. The shell 41 is provided with an opening communicating with the accommodating cavity, and the cover plate 43 may cover the opening to close the accommodating cavity.

The positive electrode plate, the negative electrode plate and the separator may form an electrode assembly 42 through a winding process or a stacking process. The electrode assembly 42 is packaged in the accommodating cavity. The electrode assembly 42 is infiltrated with the electrolytic solution. There may be one or more electrode assemblies 42 in the battery 4, which may be adjusted as required.

This application further provides an electrical device. The electrical device includes the foregoing secondary battery.

Further, in the foregoing electrical device, the secondary battery may be present in a form of a battery cell, and may further be assembled into a form of a battery pack.

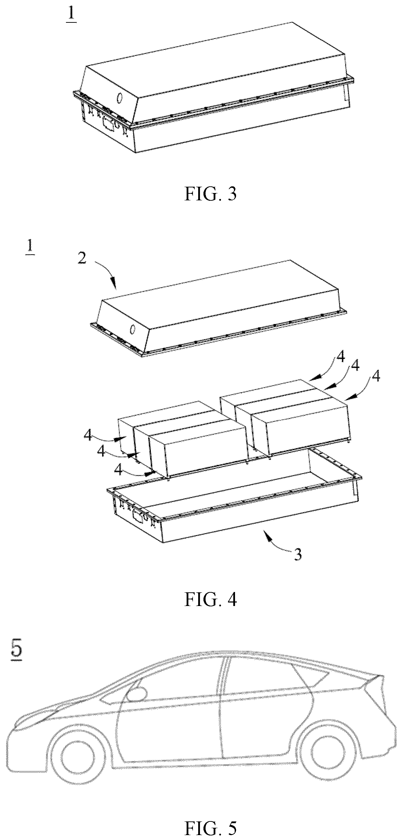

FIG. 3 and FIG. 4 are a battery pack 1 as an example. The battery pack 1 includes a battery box and one or more secondary batteries 4 disposed in the battery box. The battery box includes an upper box body 2 and a lower box body 3, and the upper box body 2 may cover the lower box body 3 to form a closed space for the secondary batteries 4.

The plurality of secondary batteries 4 may be laid out in the battery box in any manners.

The foregoing secondary batteries or the battery pack assembled by the secondary batteries may be used as a power supply of the electrical device, and may also be used as an energy storage unit of the electrical device.

The foregoing electrical device may be, but not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

FIG. 5 is an electrical device 5 as an example. The electrical device 5 is a battery electric vehicle, a hybrid electric vehicle, a plug-in hybrid electric vehicle, or the like. In order to meet the needs of the electrical device 5 for high power and high energy density of a secondary battery, the form of a battery pack may be used.

The electrical device as another example may be a mobile phone, a tablet computer, a laptop computer, or the like. The device is typically required to be thin and light, and may use a battery as a power supply.

Hereinafter, the application will be illustrated with reference to specific embodiments, but the application is limited to the following embodiments. It should be understood that the appended claims summarize the scope of the application, under the guidance of the concept of the application, a person skilled in the art shall realize that certain changes made to embodiments of the application will be covered by the spirit and scope of the claims of the application.

The following are specific embodiments.

### SPECIFIC EMBODIMENTS

### Embodiment 1

### (1) Preparation of modified negative electrode material: preparing various modified negative electrode materials through the following specific steps:

Modified negative electrode material C1: dispersing 10 g of artificial graphite (C0) into 50 g of ethyl methyl carbonate,
stirring the mixture for 1 h, adding 0.05 g of dichlorodimethylsilane, stirring the mixture for 0.5 h, adding 0.2 g of tetraethyl orthosilicate, stirring the mixture for 16 h, washing and filtering the mixture using ethyl methyl carbonate, and performing vacuum drying at 60°C for 12 h.

Infrared testing is performed on a raw graphite and a prepared modified negative electrode material, and it is found by comparison that: the modified negative electrode material shows a Si-O bond signal at 1100 to 1000⁻¹ or 800 cm⁻¹, shows a C-O signal at 1290 to 1270 cm⁻¹, 1280 to 1210 cm⁻¹, or 1265 cm⁻¹, or 829 cm⁻¹, or 1250 to 1110 cm⁻¹, or 1240 cm⁻¹ to 1160 cm⁻¹, or 1130 to 1000 cm⁻¹, or 1125 to 1110 cm⁻¹, or 1050 to 1000 cm⁻¹, and shows a C-H signal at 2890 cm⁻¹, or 1340 cm⁻¹.

Modified negative electrode material C2: dispersing 10 g of artificial graphite into 50 g of glycol dimethyl ether, stirring the mixture for 1 h, adding 0.05 g of dichlorodimethylsilane, stirring the mixture for 0.5 h, adding 0.2 g of tetraethyl orthosilicate, stirring the mixture for 16 h, washing and filtering the mixture using glycol dimethyl ether, and performing vacuum drying at 60°C for 12 h.

Modified negative electrode material C3: dispersing 10 g of artificial graphite into 50 g of ethyl acetate, stirring the mixture for 1 h, adding 0.05 g of dichlorodimethylsilane, stirring the mixture for 0.5 h, adding 0.2 g of tetraethyl orthosilicate, stirring the mixture for 16 h, washing and filtering the mixture using ethyl acetate, and performing vacuum drying at 60°C for 12 h.

Modified negative electrode material C4: dispersing 10 g of artificial graphite into 50 g of ethanol, stirring the mixture for 1 h, adding 0.05 g of ammonia water, stirring the mixture for 0.5 h, adding 0.2 g of tetraethyl orthosilicate, stirring the mixture for 16 h, washing and filtering the mixture using ethanol, and performing vacuum drying at 60°C for 12 h.

Modified negative electrode material C5: dispersing 10 g of artificial graphite into 50 g of ethanol, stirring the mixture for 1 h, adding 0.05 g of hydrochloric acid, stirring the mixture for 0.5 h, adding 0.2 g of tetraethyl orthosilicate, stirring the mixture for 16 h, washing and filtering the mixture using ethanol, and performing vacuum drying at 60°C for 12 h.

Modified negative electrode material C6: dispersing 10 g of artificial graphite into 50 g of ethyl methyl carbonate, stirring the mixture for 1 h, adding 0.05 g of dichlorodimethylsilane, stirring the mixture for 0.5 h, adding 0.2 g of tetrapropyl orthosilicate, stirring the mixture for 16 h, washing and filtering the mixture using ethyl methyl carbonate, and performing vacuum drying at 60°C for 12 h.

Modified negative electrode material C7: dispersing 10 g of artificial graphite (C0) into 50 g of ethyl methyl carbonate,
stirring the mixture for 1 h, adding 0.05 g of dichlorodimethylsilane, stirring the mixture for 0.5 h, adding 0.2 g of tetrahexylsilane, stirring the mixture for 16 h, washing and filtering the mixture using ethyl methyl carbonate, and performing vacuum drying at 60°C for 12 h.

Modified negative electrode material C8: dispersing 10 g of artificial graphite into 50 g of ethyl methyl carbonate, stirring the mixture for 1 h, adding 0.05 g of dichlorodimethylsilane, stirring the mixture for 0.5 h, adding 0.2 g of tetraethyl carbonate, stirring the mixture for 16 h, washing and filtering the mixture using ethyl methyl carbonate, and performing vacuum drying at 60°C for 12 h.

Modified negative electrode material C9: dispersing 10 g of artificial graphite into 50 g of ethyl methyl carbonate, stirring the mixture for 1 h, adding 0.05 g of dichlorodimethylsilane, stirring the mixture for 0.5 h, adding 0.2 g of teraethyl pyrophosphate, stirring the mixture for 16 h, washing and filtering the mixture using ethyl methyl carbonate, and performing vacuum drying at 60°C for 12 h.
modified negative electrode material Si/C1: dispersing 10 g of a silicon-carbon composite (Btr New Material Group Co., Ltd S500 Si0) into 50 g of ethyl methyl carbonate, stirring the mixture for 1 h, adding 0.01 g of dichlorodimethylsilane, stirring the mixture for 0.5 h, adding 0.2 g of tetraethyl orthosilicate, stirring the mixture for 16 h, washing and filtering the mixture using ethyl methyl carbonate, and performing vacuum drying at 60°C for 12 h.

Modified negative electrode material Si/C2: dispersing 10 g of a silicon-carbon composite (Btr New Material Group Co., Ltd S500) into 50 g of ethyl methyl carbonate, stirring the mixture for 1 h, adding 0.05 g of dichlorodimethylsilane, stirring the mixture for 0.5 h, adding 0.2 g of tetraethyl orthosilicate, stirring the mixture for 16 h, washing and filtering the mixture using ethyl methyl carbonate, and performing vacuum drying at 60°C for 12 h.

Modified negative electrode material Si/C3: dispersing 10 g of a silicon-carbon composite (Btr New Material Group Co., Ltd S500) into 50 g of ethyl methyl carbonate, stirring the mixture for 1 h, adding 0.1 g of dichlorodimethylsilane, stirring the mixture for 0.5 h, adding 0.2 g of tetraethyl orthosilicate, stirring the mixture for 16 h, washing and filtering the mixture using ethyl methyl carbonate, and performing vacuum drying at 60°C for 12 h.

Modified negative electrode material Si/C4: dispersing 10 g of a silicon-carbon composite (Btr New Material Group Co., Ltd S500) into 50 g of ethyl methyl carbonate, stirring the mixture for 1 h, adding 0.5 g of dichlorodimethylsilane, stirring the mixture for 0.5 h, adding 0.2 g of tetraethyl orthosilicate, stirring the mixture for 16 h, washing and filtering the mixture using ethyl methyl carbonate, and performing vacuum drying at 60°C for 12 h.

Modified negative electrode material Si/C5: dispersing 10 g of a silicon-carbon composite (Btr New Material Group Co., Ltd S500) into 50 g of ethyl methyl carbonate, stirring the mixture for 1 h, adding 0.1 g of dichlorodimethylsilane, stirring the mixture for 0.5 h, adding 0.05 g of tetraethyl orthosilicate, stirring the mixture for 16 h, washing and filtering the mixture using ethyl methyl carbonate, and performing vacuum drying at 60°C for 12 h.

Modified negative electrode material Si6/C6: dispersing 10 g of a silicon-carbon composite (Btr New Material Group Co., Ltd S500) into 50 g of ethyl methyl carbonate, stirring the mixture for 1 h, adding 0.1 g of dichlorodimethylsilane, stirring the mixture for 0.5 h, adding 0.1 g of tetraethyl orthosilicate, stirring the mixture for 16 h, washing and filtering the mixture using ethyl methyl carbonate, and performing vacuum drying at 60°C for 12 h.

Modified negative electrode material Si/C7: dispersing 10 g of a silicon-carbon composite (Btr New Material Group Co., Ltd S500) into 50 g of ethyl methyl carbonate, stirring the mixture for 1 h, adding 0.1 g of dichlorodimethylsilane, stirring the mixture for 0.5 h, adding 0.5 g of tetraethyl orthosilicate, stirring the mixture for 16 h, washing and filtering the mixture using ethyl methyl carbonate, and performing vacuum drying at 60°C for 12 h.

Modified negative electrode material Si/C8: dispersing 10 g of a silicon-carbon composite (Btr New Material Group Co., Ltd S500) into 50 g of ethyl methyl carbonate, stirring the mixture for 1 h, adding 0.1 g of dichlorodimethylsilane, stirring the mixture for 0.5 h, adding 1 g of tetraethyl orthosilicate, stirring the mixture for 16 h, washing and filtering the mixture using ethyl methyl carbonate, and performing vacuum drying at 60°C for 12 h.

The preparation conditions of the foregoing various modified negative electrode materials are shown in Table 1.

**Table 1**

| | Solvent | Activ e substr ate | Amou nt of active substr ate | Catalyst | Amount of catalyst | Silicate ester | Amount of silicate ester |
|---|---|---|---|---|---|---|---|
| C0 | / | Graph ite | 10 g | / | / | / | / |
| C1 | Ethyl methyl carbonate | Graph ite | 10 g | Dichlorodimethylsilane | 0.05 g | Tetraethyl orthosilicate | 0.2 g |
| C2 | Glycol dimethyl ether | Graph ite | 10 g | Dichlorodimethylsilane | 0.05 g | Tetraethyl orthosilicate | 0.2 g |
| C3 | Ethyl acetate | Graph ite | 10 g | Dichlorodimethylsilane | 0.05 g | Tetraethyl orthosilicate | 0.2 g |
| C4 | Ethanol | Graph ite | 10 g | Ammonia water | 0.05 g | Tetraethyl orthosilicate | 0.2 g |
| C5 | Ethanol | Graph ite | 10 g | Hydrochloric acid | 0.05 g | Tetraethyl orthosilicate | 0.2 g |
| C6 | Ethyl methyl carbonate | Graph ite | 10 g | Dichlorodimethylsilane | 0.05 g | Tetrapropyl orthosilicate | 0.2 g |
| C7 | Ethyl methyl carbonate | Graph ite | 10 g | Dichlorodimethylsilane | 0.05 g | Tetrahexylsilane | 0.2 g |
| C8 | Ethyl methyl carbonate | Graph ite | 10 g | Dichlorodimethylsilane | 0.05 g | Tetraethyl carbonate | 0.2 g |
| C9 | Ethyl methyl carbonate | Graph ite | 10 g | Dichlorodimeth ylsilane | 0.05 g | Teraethyl pyrophosphate | 0.2 g |
| Si0 | / | S500 | 10 g | / | / | / | / |
| Si/ C1 | Ethyl methyl carbonate | S500 | 10 g | Dichlorodimethylsilane | 0.01 g | Tetraethyl orthosilicate | 0.2 g |
| Si/ C2 | Ethyl methyl carbonate | S500 | 10 g | Dichlorodimethylsilane | 0.05 g | Tetraethyl orthosilicate | 0.2 g |
| Si/ C3 | Ethyl methyl carbonate | S500 | 10 g | Dichlorodimethylsilane | 0.1 g | Tetraethyl orthosilicate | 0.2 g |
| Si/ C4 | Ethyl methyl carbonate | S500 | 10 g | Dichlorodimethylsilane | 0.5 g | Tetraethyl orthosilicate | 0.2 g |
| Si/ C5 | Ethyl methyl carbonate | S500 | 10 g | Dichlorodimethylsilane | 0.1 g | Tetraethyl orthosilicate | 0.05 g |
| Si/ C6 | Ethyl methyl carbonate | S500 | 10 g | Dichlorodimethylsilane | 0.1 g | Tetraethyl orthosilicate | 0.1 g |
| Si/ C7 | Ethyl methyl carbonate | S500 | 10 g | Dichlorodimethylsilane | 0.1 g | Tetraethyl orthosilicate | 0.5 g |
| Si/ C8 | Ethyl methyl carbonate | S500 | 10 g | Dichlorodimethylsilane | 0.1 g | Tetraethyl orthosilicate | 1 g |

| | | | | | | | |
|---|---|---|---|---|---|---|---|
| where "/" represents no modification treatment. | | | | | | | |

### Embodiment 2

### (1) Preparation of negative electrode plate

C1-C7 negative electrode plates: dissolving a modified negative electrode material, acetylene black as a conductive agent, styrene-butadiene rubber (SBR) as a binder, and sodium carboxymethylcellulose (CMC) as a thickener into deionized water as a solvent at a mass ratio of 90: 4: 4: 2, and evenly mixing the mixture to make a negative electrode slurry; and evenly coating a copper foil as a negative current collector with the negative electrode slurry, performing drying to obtain a negative electrode diaphragm, and performing cold calendering and slitting to obtain a negative electrode plate.

The foregoing modified negative electrode materials C1 to C7 are used as the modified negative electrode materials respectively, and the prepared negative electrode plates are accordingly donated as C1 to C7.

### (2) Preparation of positive electrode plate

LFP positive electrode: dissolving lithium iron phosphate as a positive electrode active material, acetylene black as a conductive agent, and polyvinylidene fluoride (PVDF) as a binder into N-methylpyrrolidone (NMP) as a solvent at a mass ratio of 90: 5: 5, and fully stirring and evenly mixing the mixture to obtain a positive electrode slurry; and evenly coating a positive current collector with the positive electrode slurry, and performing drying, cold calendering and slitting to obtain a positive electrode plate.

### (3) Preparation of a separator: using a polypropylene film as the separator.

### (4) Preparation of an electrolyte:

ELO electrolytic solution: in an argon atmosphere glove box (H₂O < 0.1 ppm, O₂ < 0.1 ppm), evenly mixing organic solvents EC/EMC at a volume ratio of 3/7, adding 12.5 wt% of a LiPF₆ lithium salt to be dissolved in the organic solvent, adding 1 wt% of PS, 0.5 wt% of DTD, 0.5 wt% of VC, and 2 wt% of FEC as additives, and evenly stirring the mixture to obtain a corresponding electrolytic solution.

### (5) Preparation of lithium-ion battery

Stacking a positive electrode plate, a separator and a negative electrode plate in sequence in such a way that the separator is located between the positive and negative electrode plates to serve a function of separation, and performing winding to obtain an electrode assembly; and putting the electrode assembly in a battery shell, after drying, injecting an electrolytic solution, and performing processes such as chemical formation and standing to obtain a lithium-ion battery.

The foregoing negative electrode plates C1 to C7 are used as the negative electrode plates respectively, and the prepared lithium-ion batteries are donated as C1 to C7.

### (6) Performance test of lithium-ion battery

### 1. battery cell internal resistance (mΩ)

At 25°C, charging a shipped lithium-ion battery and a lithium-ion battery cycled 1000 times at 45°C at a constant current of 1 C to 4.3 V, charging same at a constant voltage of 4.3 V until the current is less than 0.05 C, and discharging same at 1 C for 30 min, i.e., adjusting electricity of battery cells to 50% SOC. Making positive and negative pen meters of a TH2523A alternating current internal resistance tester contact with positive and negative electrodes of the batteries respectively, reading internal resistance values of the batteries through the internal resistance tester, and recording initial battery cell internal resistance and battery cell internal resistance after 1000 cycles respectively, which are denoted as RO and R1000 respectively.

### 2. Capacity retention rate for 1000 cycles at 45°C

At 45°C, charging a lithium-ion battery at a constant current of 1 C to 4.3 V, charging same at a constant voltage of 4.3 V until the current is less than 0.05 C, and discharging the lithium-ion battery at a constant current of 1 C to 3.0 V, the above being a charging and discharging process. Repeating charging and discharging in such a way, and calculating a capacity retention rate of the lithium-ion battery after 1000 cycles.

Capacity retention rate of lithium-ion battery after 1000 cycles at 45°C (%) C1000 = (discharge capacity at 1000th cycle/discharge capacity at first cycle) × 100%.

### 3. Capacity retention rate for 300 days of storage at 60°C

At 25°C, charging a lithium-ion battery at a constant current of 1 C until a voltage reaches 4.3 V, charging same at the constant voltage of 4.3 V until the current is less than 0.05 C, and discharging same at a constant current of 1 C to 3.0 V, the above being a charging and discharging process, and at this time, lithium being tested. Putting the fully charged lithium-ion battery into a constant temperature box at 60°C to test a capacity after storage for 300 days.
Capacity retention rate of lithium-ion battery after storage for 300 days at 60°C (%) T300 = (discharge capacity after 300 days of storage/discharge capacity at first cycle) × 100%.

For specific test results, see Table 2.

### Embodiment 3

Embodiment 3 is basically the same as Embodiment 2, except that: in step (1) preparation of negative electrode plate, the modified negative electrode materials C1 to C7 are replaced with Si/C1 to Si/C8 respectively, and the prepared negative electrode plates are correspondingly donated as Si/C1 to Si/C8.

Preparation of positive electrode plate is as follows: dissolving LiNi_{0.8}Co_{0.1}Mn_{0.1}O₂ (NCM811) as a positive electrode active material, acetylene black as a conductive agent, and polyvinylidene fluoride (PVDF) as a binder into N-methylpyrrolidone (NMP) as a solvent at a mass ratio of 90: 5: 5, and fully stirring and evenly mixing the mixture to obtain a positive electrode slurry; and evenly coating a positive current collector with the positive electrode slurry, and performing drying, cold calendering and slitting to obtain the positive electrode plate.

The remaining steps are the same as those in Embodiment 2, and the prepared lithium-ion batteries are correspondingly donated as Si/C1 to Si/C8. Specific parameters and test results are shown in Table 2.

### Embodiments 4-7

Embodiments 4-7 are basically the same as Embodiment 3, and in Embodiments 4-7, Si/C1, Si/C2, Si/C3 and Si/C4 are used as the negative electrode active materials respectively; and an EL1 electrolytic solution, an EL2 electrolytic solution, an EL3 electrolytic solution and an EL4 electrolytic solution are used as the electrolytic solutions respectively, and the specific preparation process of the electrolytic solution is as follows:

EL1 electrolytic solution: in an argon atmosphere glove box (H₂O < 0.1 ppm, O₂ < 0.1 ppm), evenly mixing organic solvents EC/EMC at a volume ratio of 3/7, adding 12.5 wt% of a LiPF6 lithium salt to be dissolved in the organic solvent, adding 1 wt% of PS, 0.5 wt% of DTD, 0.5 wt% of VC, 2 wt% of FEC, and 1% of tetraethyl orthosilicate as additives, and evenly stirring the mixture to obtain a corresponding electrolytic solution.

EL2 electrolytic solution: in an argon atmosphere glove box (H₂O < 0.1 ppm, O₂ < 0.1 ppm), evenly mixing organic solvents EC/EMC at a volume ratio of 3/7, adding 12.5 wt% of a LiPF6 lithium salt to be dissolved in the organic solvent, adding 1 wt% of PS, 0.5 wt% of DTD, 0.5 wt% of VC, 2 wt% of FEC, and 1% of tetrapropyl orthosilicate as additives, and evenly stirring the mixture to obtain a corresponding electrolytic solution.

EL3 electrolytic solution: in an argon atmosphere glove box (H₂O < 0.1 ppm, O₂ < 0.1 ppm), evenly mixing organic solvents EC/EMC at a volume ratio of 3/7, adding 12.5 wt% of a LiPF6 lithium salt to be dissolved in the organic solvent, adding 1 wt% of PS, 0.5 wt% of DTD, 0.5 wt% of VC, 2 wt% of FEC, and 1% of tetraethyl carbonate as additives, and evenly stirring the mixture to obtain a corresponding electrolytic solution.

EL4 electrolytic solution: in an argon atmosphere glove box (H₂O < 0.1 ppm, O₂ < 0.1 ppm), evenly mixing organic solvents EC/EMC at a volume ratio of 3/7, adding 12.5 wt% of a LiPF6 lithium salt to be dissolved in the organic solvent, adding 1 wt% of propane sultone (PS), 0.5 wt% of ethylene sulfate (DTD), 0.5 wt% of vinylene carbonate (VC), 2 wt% of fluoroethylene carbonate (FEC), and 1% of teraethyl pyrophosphate as additives, and evenly stirring the mixture to obtain a corresponding electrolytic solution.

The remaining steps are the same as those in Embodiment 3, and for specific parameters and test results, see Table 2.

### Comparative Embodiment 1

Comparative Embodiment 1 is basically the same as Embodiment 2, only except that: in Comparative Embodiment 1, C0 (graphite) is directly used as a negative electrode active material in a negative electrode plate.

The remaining steps are the same as those in Embodiment 2, and for specific parameters and test results, see Table 2.

### Comparative Embodiment 2

Comparative Embodiment 2 is basically the same as Embodiment 2, except that: in preparation of a negative electrode plate in Comparative Embodiment 2, the modified negative electrode material C8 is used as the modified negative electrode material.

The remaining steps are the same as those in Embodiment 2, and for specific parameters and test results, see Table 2.

### Comparative Embodiment 3

Comparative Embodiment 3 is basically the same as Embodiment 2, except that: in preparation of a negative electrode plate in Comparative Embodiment 2, the modified negative electrode material C9 is used as the modified negative electrode material.

The remaining steps are the same as those in Embodiment 2, and for specific parameters and test results, see Table 2.

### Comparative Embodiments 4-7

Comparative Embodiments 4-7 are basically the same as Embodiment 1 respectively, except that: the EL1 electrolytic solution, the EL2 electrolytic solution, the EL3 electrolytic solution and the EL4 electrolytic solution are used as the electrolytic solutions respectively, and the specific preparation processes of the electrolytic solutions EL1 to EL4 are the same as those in Embodiments 4-7.

The remaining steps are the same as those in Comparative Embodiment 1, and for specific parameters and test results, see Table 2.

### Comparative Embodiment 8

Comparative Embodiment 8 is basically the same as Embodiment 3, only except that: in Comparative Embodiment 8, the silicon-carbon composite Si0 (i.e., S500) is directly used as a negative electrode active material in a negative electrode plate.

The remaining steps are the same as those in Embodiment 2, and for specific parameters and test results, see Table 2.

In Table 3, RO (mΩ) , R1000(mΩ), C1000 (%) and T300% represent initial battery cell internal resistance, battery cell internal resistance after 1000 cycles, a capacity retention rate of a battery cell for 1000 cycles at 45°C, and a capacity retention rate of the battery cell for 300 days of storage at 60°C respectively.

**Table 2**

| | Negative electrode active material | Positive electrode material | Electrolytic solution | RO (mΩ) | R1000 (mΩ) | C1000 (%) | T300% |
|---|---|---|---|---|---|---|---|
| Embodiment 2 | C1 | LFP | EL0 | 844 | 999 | 45 | 40 |
| | C2 | LFP | EL0 | 844 | 1002 | 42 | 39 |
| | C3 | LFP | EL0 | 842 | 1001 | 45 | 37 |
| | C4 | LFP | EL0 | 841 | 1002 | 45 | 37 |
| | C5 | LFP | EL0 | 841 | 998 | 42 | 37 |
| | C6 | LFP | EL0 | 846 | 1003 | 44 | 37 |
| | C7 | LFP | EL0 | 859 | 1031 | 35 | 31 |
| Comparative Embodiment 1 | C0 (graphite) | LFP | EL0 | 870 | 1049 | 31 | 21 |
| Comparative Embodiment 2 | C8 | LFP | EL0 | 870 | 1045 | 31 | 27 |
| Comparative Embodiment 3 | C9 | LFP | EL0 | 866 | 1046 | 30 | 26 |
| Comparative Embodiment 4 | C0 (graphite) | LFP | EL1 | 867 | 1050 | 29 | 30 |
| Comparative Embodiment 5 | C0 (graphite) | LFP | EL2 | 865 | 1048 | 28 | 29 |
| Comparative Embodiment 6 | C0 (graphite) | LFP | EL3 | 867 | 1050 | 30 | 26 |
| Comparative Embodiment 7 | C0 (graphite) | LFP | EL4 | 865 | 1049 | 30 | 28 |
| Embodiment 3 | Si/C1 | NCM | EL0 | 993 | 1302 | 25 | 20 |
| | Si/C2 | NCM | EL0 | 978 | 1285 | 34 | 27 |
| | Si/C3 | NCM | EL0 | 973 | 1278 | 37 | 30 |
| | Si/C4 | NCM | EL0 | 986 | 1293 | 28 | 22 |
| | Si/C5 | NCM | EL0 | 997 | 1313 | 24 | 21 |
| | Si/C6 | NCM | EL0 | 982 | 1296 | 33 | 28 |
| | Si/C7 | NCM | EL0 | 977 | 1289 | 36 | 31 |
| | Si/C8 | NCM | EL0 | 990 | 1304 | 27 | 23 |
| Embodiment 4 | Si/C1 | NCM | EL1 | 1009 | 1328 | 16 | 12 |
| Embodiment 5 | Si/C2 | NCM | EL2 | 1009 | 1329 | 15 | 13 |
| Embodiment 6 | Si/C3 | NCM | EL3 | 1007 | 1328 | 17 | 14 |
| Embodiment 7 | Si/C4 | NCM | EL4 | 1008 | 1326 | 15 | 14 |
| Comparative Embodiment 8 | Si0 (S500) | NCM | EL0 | 1110 | 1929 | 20 | 10 |

As can be seen from data in Table 2, by using the modified negative electrode material in this application, internal resistance of a battery may be reduced, and cycle performance of the battery may be improved. For example, compared with an unmodified graphite negative electrode in Comparative Embodiment 1, a graphite negative electrode in Embodiment 2 is modified by silicate ester, which is conducive to reducing impedance deterioration in a cycle process, improving interface stability, and thus increasing a cycle capacity retention rate. It indicates that the negative electrode material treated with the silicate ester can improve cycle stability of a battery cell. Further, graphite negative electrodes in Comparative Embodiments 2 and 3 are treated using non-silicate ester. It can be seen from performance feedback of the battery cell, there is little improvement in performance of the battery cell, while experiments on Comparative Embodiments 4-7 prove that direct introduction of silicate ester or a silicate ester-like additive into an electrolytic solution also has little improvement in the cycle performance of the battery.

At the same time, compared with an unmodified carbon-silicon composite negative electrode S500 in Comparative Embodiment 2, a carbon-silicon negative electrode material modified by silicate ester in Embodiment 3 plays a role of improving the cycle stability and capacity exertion of the battery cell.

Finally, it should be noted that: The foregoing embodiments are merely intended to describe the technical solutions of this application rather than to limit the technical solutions. Although this application is described in detail with reference to the foregoing embodiments, persons of ordinary skill in the art should understand that: they may still make modifications to the technical solutions described in the foregoing examples or make equivalent replacements to some or all of the technical features thereof; however, these modifications or replacements do not make the essence of the corresponding technical solution depart from the scope of the technical solutions of the embodiments, and should all be covered in the scope of the claims and specification in this application. In particular, respective technical features mentioned in the respective embodiments may be combined in any manner as long as there is no structural conflict. This application is not limited to the specific embodiments disclosed in this specification, but includes all technical solutions falling within the scope of the claims.

## Claims

1. A modified negative electrode material, **characterized in that** the modified negative electrode material comprises a negative electrode active substrate and a silicate ester group connected to the negative electrode active substrate through an oxygen atom, and a structure of the silicate ester group is shown in formula (1): 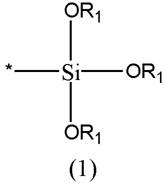
wherein each R₁ is independently selected from substituted or unsubstituted alkyl having 1 to 10 carbon atoms, or substituted or unsubstituted alkenyl having 1 to 10 carbon atoms; and
* represents a connecting site.

2. The modified negative electrode material according to claim 1, **characterized in that** each R₁ is independently selected from substituted or unsubstituted alkyl having 1 to 6 carbon atoms; and
Optionally, each R₁ is independently selected from substituted or unsubstituted alkyl having 1 to 4 carbon atoms.

3. The modified negative electrode material according to any one of claims 1 to 2, **characterized in that** each R₁ is independently selected from unsubstituted chain alkyl having 1 to 4 carbon atoms, or halogen-substituted chain alkyl having 1 to 4 carbon atoms.

4. The modified negative electrode material according to any one of claims 1 to 3, **characterized in that** each R₁ is independently any one selected from methyl, ethyl, n-propyl, isopropyl, n-butyl, isobutyl, and a halide thereof.

5. The modified negative electrode material according to any one of claims 1 to 4, **characterized in that** the silicate ester group satisfies at least one of following conditions (a) to (b):
(a) a percentage of the silicate ester group in the modified negative electrode material ranges from 0.005 wt% to 5 wt%; and
(b) the silicate ester group is located on a surface of the negative electrode active substrate to form a coating layer.

6. The modified negative electrode material according to claim 5, **characterized in that** the coating layer has a thickness ranging from 1 nm to 20 nm.

7. The modified negative electrode material according to any one of claims 1 to 6, **characterized in that** the negative electrode active substrate comprises at least one of a carbon substrate and a silicon substrate.

8. A preparation method for a modified negative electrode material, **characterized by** comprising following steps:
performing a transesterification reaction between a negative electrode active substrate and a compound in formula (2) to prepare the modified negative electrode material; 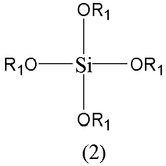
wherein hydroxyl is contained on a surface of the negative electrode active substrate; and R₁ in formula (2) is same as R₁ in claim 1.

9. The preparation method for the modified negative electrode material according to claim 8, **characterized in that** the transesterification reaction is performed at a temperature ranging from 50°C to 80°C for 6 h to 24 h.

10. The preparation method for the modified negative electrode material according to any one of claims 8 to 9, **characterized in that** a mass ratio of the compound in formula (2) to the negative electrode active substrate is (0.05 to 1): 10.

11. The preparation method for the modified negative electrode material according to any one of claims 8 to 10, **characterized in that** the transesterification reaction is performed under an action of a transesterification catalyst, and the transesterification catalyst satisfies at least one of following conditions (c) to (d):
(c) the transesterification catalyst comprises at least one of a basic catalyst, an acid catalyst and an organic silane;
optionally, the transesterification catalyst comprises at least one of inorganic base, organic base, inorganic acid, organic acid and organic chlorosilane; and
optionally, the transesterification catalyst comprises at least one of sodium hydroxide, potassium hydroxide, hydrochloric acid, sulfuric acid, ammonia water and dichlorodimethylsilane; and
(d) a mass ratio of the transesterification catalyst to the negative electrode active substrate is (0.01 to 0.5): 10.

12. The preparation method for the modified negative electrode material according to any one of claims 8 to 11, **characterized in that** the transesterification reaction is performed in an organic solvent, and the organic solvent satisfies at least one of following conditions (e) to (f):
(e) the organic solvent comprises at least one of a carbonate solvent, a carboxylate solvent, an alcohol solvent and an ether solvent; and
optionally, the organic solvent comprises at least one of dimethyl carbonate, ethyl methyl carbonate, ethanol and glycol dimethyl ether; and
(f) a mass ratio of the organic solvent to the negative electrode active substrate is (10 to 300): 10.

13. A negative electrode plate, **characterized in that** the negative electrode plate comprises a current collector and a negative electrode active layer disposed on a surface of the current collector, and ingredients of the negative electrode active layer comprise the modified negative electrode material according to any one of claims 1 to 7, or the modified negative electrode material prepared through the preparation method for the modified negative electrode material according to any one of claims 8 to 12.

14. The negative electrode plate according to claim 13, **characterized in that** a mass percentage of the modified negative electrode material in the negative electrode active layer ranges from 70% to 99.5%.

15. A secondary battery, **characterized in that** the secondary battery comprises the negative electrode plate according to any one of claims 13 to 14.

16. The secondary battery according to claim 15, **characterized in that** a surface of the negative electrode active layer in the negative electrode plate is loaded with silicate, and a silicic acid group in the silicate is derived from decomposition of the silicate ester group.

17. An electrical device, **characterized in that** the electrical device comprises the secondary battery according to any one of claims 15 to 16.
